# FASCICULE DE BREVET EUROPEEN

(11) **EP 4 067 040 B1**
(45) Date de publication et mention de la délivrance du brevet: **27.12.2023**
(21) Numéro de dépôt: 22165787.7
(22) Date de dépôt: 31.03.2022
(51) Int. Cl.: B29C 33/48, B29C 70/32, B29C 70/44, B29D 99/00, B29C 70/54

(54) **OUTIL POUR LA FABRICATION D'UN PANNEAU AUTO-RAIDI ET PROCÉDÉ DE FABRICATION D'UN PANNEAU AUTO-RAIDI UTILISANT UN TEL OUTIL**
WERKZEUG ZUR HERSTELLUNG EINER SELBSTVERSTEIFENDEN PLATTE UND VERFAHREN ZUR HERSTELLUNG EINER SELBSTVERSTEIFENDEN PLATTE UNTER VERWENDUNG EINES SOLCHEN WERKZEUGS
TOOL FOR MANUFACTURING A SELF-STIFFENED PANEL AND METHOD FOR MANUFACTURING A SELF-STIFFENED PANEL USING SUCH A TOOL

(30) Priorité: 01.04.2021 FR 2103404
(43) Date de publication de la demande: 05.10.2022
(73) Titulaire: AIRBUS OPERATIONS, 31060 Toulouse Cedex 9 (FR)
(72) Inventeur: BEZARD, Gilles, 31060 TOULOUSE (FR); FORDOS, Nicolas, 31060 TOULOUSE (FR)
(74) Mandataire: Cabinet Le Guen Maillet

(56) Documents cités:
- EP-A1- 2 361 753
- EP-A1- 2 517 858
- WO-A2-2007/148301
- US-A1- 2010 155 984

## Description

### DOMAINE TECHNIQUE

La présente invention concerne un outil pour la fabrication d'un panneau auto-raidi ainsi qu'un procédé de fabrication d'un panneau auto-raidi utilisant un tel outil.

### ÉTAT DE LA TECHNIQUE ANTÉRIEURE

Un panneau auto-raidi est constitué d'une peau qui peut être plane ou cintrée et de raidisseurs qui sont solidaires de la peau et qui s'étendent perpendiculairement à ladite peau. Les raidisseurs assurent une rigidification de la peau pour améliorer sa résistance aux sollicitations mécaniques.

Chaque raidisseur prend la forme d'un profilé allongé dont la section peut être de différentes formes, comme par exemple en U, L ou T.

Il existe différents procédés pour réaliser ce type de panneaux auto-raidis en matériau composite. Par exemple, il est connu d'utiliser des inserts qui prennent la forme en négatif des raidisseurs. Des premières couches de fibres sont déposées sur les inserts, qui sont ensuite fixées les unes à côté des autres sur un cadre. Des deuxièmes couches de fibres sont alors déposées sur les premières couches, pour former la peau et solidariser les premières couches de deux inserts voisins entre elles.

L'ensemble est ensuite placé dans un sac à vide et chauffé dans un autoclave pour polymériser la résine contenue dans les couches de fibres, et après solidification, les inserts sont retirés en laissant les couches de fibres rigidifiées.

Bien qu'un tel procédé donne de bons résultats lorsque le panneau auto-raidi est globalement plan, il ne peut pas être mis en oeuvre, lorsqu'un panneau auto-raidi cylindrique veut être obtenu. En effet, pour réaliser un tel panneau auto-raidi cylindrique, il est nécessaire de retourner l'ensemble pour déposer les deuxièmes couches de fibres tout autour et il peut arriver alors que sous l'action de la force centrifuge et de la pesanteur, les inserts se déforment ce qui peut amener à des défauts dans le panneau auto-raidi cylindrique.

Les documents EP-A-2 361 753, US-A-2010/155984, WO-A-2007/148301 et EP-A-2 517 858 divulguent des outils de l'état de la technique.

### EXPOSÉ DE L'INVENTION

Un objet de la présente invention est de proposer un outil pour la fabrication d'un panneau auto-raidi qui permet de contrôler la géométrie du panneau auto-raidi, même en cas de mise en rotation de l'outil.

A cet effet, est proposé un outil pour la réalisation d'un panneau auto-raidi, ledit outil comportant :
- un support avec un arbre présentant un axe,
- un ensemble de poinçons disposés les uns à côté des autres parallèlement à l'axe, où entre deux poinçons voisins est délimité un canal parallèle à l'axe,
- pour chaque poinçon, deux systèmes de fixation, où chaque système de fixation comporte des premiers moyens de fixation et des deuxièmes moyens de fixation,
- pour chaque poinçon, deux moyens principaux de fixation, chacun étant prévu à une extrémité du poinçon et prenant alternativement une position de verrouillage dans laquelle le poinçon est verrouillé sur le support et une position de déverrouillage dans laquelle le poinçon n'est pas verrouillé sur le support,
l'outil étant caractérisé en ce que les premiers moyens de fixation (106a) comportent un coulisseau mobile en translation sur le support (100) parallèlement à l'axe (X) et au moins un crochet fixé au coulisseau, en ce que les deuxièmes moyens de fixation (106b) comportent au moins un nez (210) solidaire du poinçon (202), et en ce que l'outil (300) comporte des moyens d'actionnement prévus pour déplacer le coulisseau alternativement d'une position de fixation dans laquelle chaque nez se trouve entre le support et un crochet, à une position de libération dans laquelle les crochets sont décalés par rapport aux nez parallèlement à l'axe.

Avec un tel outil, chaque poinçon est maintenu en position sur sa longueur assurant ainsi un bon positionnement durant le drapage, même en cas de mise en rotation de l'outil.

Avantageusement, pour chaque poinçon, l'outil comporte deux cales amovibles, où chacune se positionne entre une extrémité du poinçon et le support.

Avantageusement, pour deux poinçons voisins, les premiers moyens de fixation correspondant à un des poinçons et les premiers moyens de fixation correspondant à l'autre des poinçons possèdent un coulisseau commun.

Avantageusement, à chaque extrémité du coulisseau, ledit coulisseau est percé d'une fenêtre oblongue et ledit outil comporte une vis de maintien vissée dans un trou taraudé du support à travers la fenêtre oblongue et où la tête de la vis de maintien déborde au-delà des bords de la fenêtre oblongue.

Avantageusement, chaque crochet est solidaire d'un corps fixé de manière amovible sur le coulisseau.

Avantageusement, l'outil comporte deux vis de blocage fixées au support, la première vis de blocage traverse le coulisseau et le corps à travers des premières fenêtres oblongues prévues à cet effet, la deuxième vis de blocage traverse le coulisseau à travers une deuxième fenêtre oblongue prévue à cet effet, le corps présente une échancrure, et ladite échancrure est arrangée de manière à recevoir la deuxième vis de blocage en position de fixation.

Avantageusement, le support comporte au niveau de sa partie inférieure, un muret qui s'étend sur le pourtour dudit support.

L'invention propose également un procédé de fabrication d'un panneau auto-raidi en matériau composite à l'aide d'un outil selon l'invention, ledit procédé de fabrication comportant
- une première étape de fourniture au cours de laquelle le support est fourni et au cours de laquelle l'arbre est fixé à un mandrin d'une machine tournante,
- une deuxième étape de fourniture au cours de laquelle des poinçons sont fournis,
- une première étape de drapage au cours de laquelle des premières couches de fibres sont déposées sur les poinçons,
- une étape de dépose au cours de laquelle un poinçon ainsi drapé est déposé sur le support,
- une étape de verrouillage au cours de laquelle les moyens principaux de fixation du poinçon ainsi calé sont placés en position de verrouillage,
- une étape de fixation au cours de laquelle les systèmes de fixation du poinçon ainsi verrouillé sont déplacés de la position de libération à la position de fixation,
- une première étape de bouclage sur l'étape de dépose tant que tous les poinçons n'ont pas été déposés,
- une deuxième étape de drapage au cours de laquelle des deuxièmes couches de fibres sont déposées sur les premières couches de fibres,
- une étape de mise sous vide au cours de laquelle l'ensemble ainsi drapé est placé dans un sac à vide,
- une étape de chauffage au cours de laquelle l'ensemble ainsi sous vide est chauffé dans un autoclave,
- une étape de libération au cours de laquelle les systèmes de fixation d'un poinçon sont déplacés de la position de fixation à la position de libération,
- une étape de déverrouillage au cours de laquelle les moyens principaux de fixation du poinçon ainsi libéré sont placés en position de déverrouillage,
- une étape de retrait au cours de laquelle le poinçon ainsi déverrouillé est retiré par déplacement parallèlement à l'axe, et
- une deuxième étape de bouclage sur l'étape de libération tant que tous les poinçons n'ont pas été retirés.

Avantageusement, le procédé de fabrication comporte, entre l'étape de dépose et l'étape de verrouillage, une étape de calage au cours de laquelle les cales sont disposées entre le poinçon ainsi déposé et le support.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en perspective d'un support d'un outil selon l'invention,
Fig. 2 est une vue en perspective d'un poinçon d'un outil selon l'invention,
Fig. 3 est une vue en coupe par un plan perpendiculaire à l'axe de rotation du support,
Fig. 4 est une vue en perspective d'un détail des moyens de fixation d'un poinçon au support en position intermédiaire, et
Fig. 5 est une vue en perspective des moyens de fixation.

### EXPOSÉ DÉTAILLÉ DE MODES DE RÉALISATION

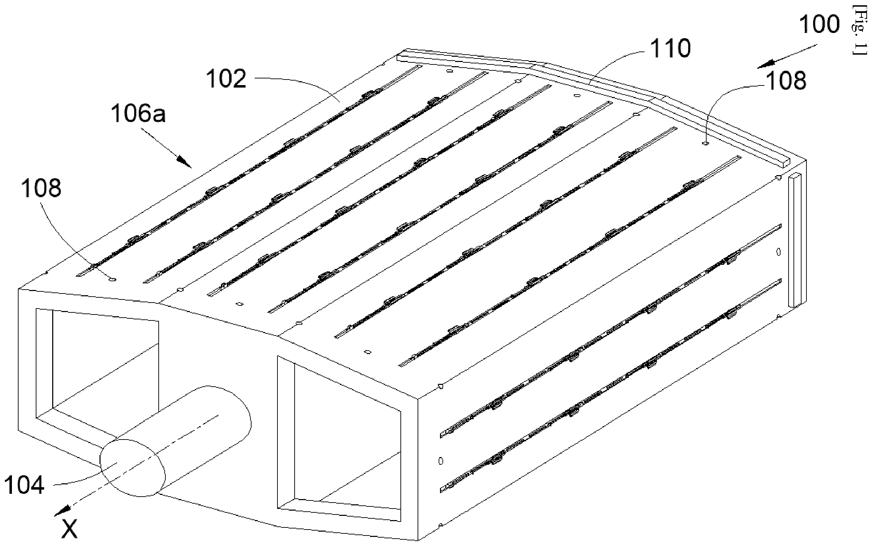

La Fig. 1 montre un support 100 qui comporte un arbre 104 qui présente un axe X et une enveloppe 102 qui est solidaire de l'arbre 104 et qui prend la forme d'un cylindre dont les génératrices sont parallèles à l'axe X.

L'arbre 104 est prévu pour coopérer avec un mandrin d'une machine tournante afin d'entraîner en rotation le support 100 autour de l'axe X.

Dans le mode de réalisation de l'invention présenté à la Fig. 1, l'enveloppe 102 prend globalement la forme d'un prisme à huit faces, mais selon la géométrie du panneau auto-raidi à obtenir, la forme de l'enveloppe 102 peut être différente.

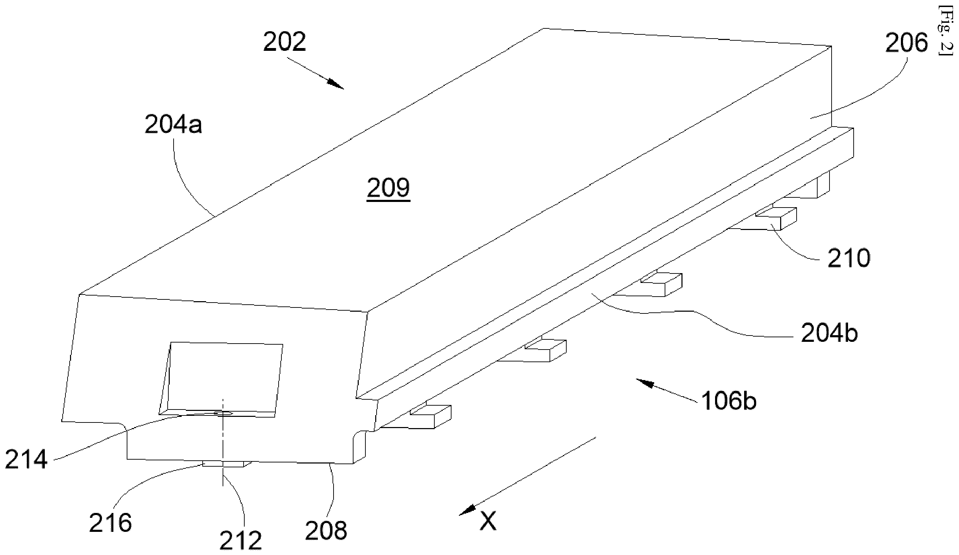

La Fig. 2 montre un poinçon 202.

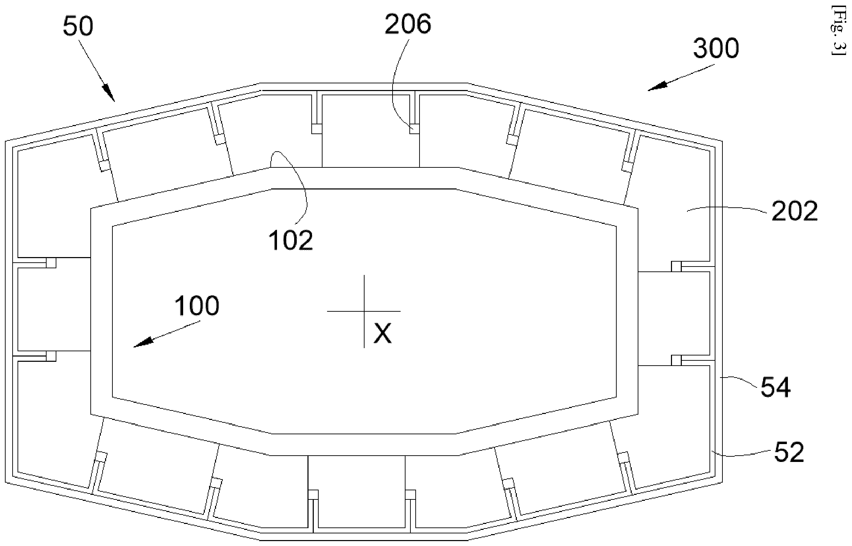

La Fig. 3 montre une coupe par un plan perpendiculaire à l'axe X d'un outil 300 selon l'invention. L'outil 300 comporte le support 100 et un ensemble de poinçons 202 où chaque poinçon 202 est fixé au support 100, et plus particulièrement à l'enveloppe 102, à l'aide de deux systèmes de fixation 106a-b, où chaque système de fixation 106a-b comporte des premiers moyens de fixation 106a montés sur le support 100 et des deuxièmes moyens de fixation 106b montés sur le poinçon 202. Il y a un système de fixation 106a-b à gauche du poinçon 202 et un à droite.

Comme cela est expliqué ci-dessous, chaque système de fixation 106a-b peut prendre alternativement une position de fixation dans laquelle les premiers moyens de fixation 106a coopèrent avec les deuxièmes moyens de fixation 106b pour assurer la fixation du poinçon 202 sur le support 100 ou une position de libération dans laquelle les premiers moyens de fixation 106a ne coopèrent pas avec les deuxièmes moyens de fixation 106b afin de permettre une séparation du poinçon 202 du support 100.

Chaque poinçon 202 prend ici globalement la forme d'un parallélépipède rectangle. Les poinçons 202 sont disposés les uns à côté des autres parallèlement à l'axe X. Ainsi, deux poinçons 202 voisins sont en contact l'un avec l'autre par une face de contact 204a-b. Il y a ainsi deux faces de contact 204a-b par poinçon 202, à savoir une première face de contact 204a et une deuxième face de contact 204b qui sont parallèles entre elles. Chaque surface de contact 204a-b est également globalement perpendiculaire à la surface de l'enveloppe 102.

Dans le mode de réalisation de l'invention présenté ici, l'une des faces de contact, ici la deuxième face de contact 204b présente un enfoncement 206 qui s'étend sur la longueur parallèle à l'axe X du poinçon 202. Comme cela est expliqué après, cet enfoncement 206 permet la réalisation d'un raidisseur. Ainsi, il y a un raidisseur formé au niveau de chaque enfoncement 206.

Selon un autre mode de réalisation, il peut également être prévu un enfoncement au niveau de chaque face de contact 204a-b, et ainsi chaque raidisseur est formé à cheval entre deux poinçons 202 voisins.

D'une manière générale, un canal parallèle à l'axe X est délimité entre deux poinçons 202 voisins, ce canal est réalisé par le ou les enfoncements 206 des poinçons 202 et permet la création des raidisseurs.

Chaque poinçon 202 comporte une base 208 qui est posée sur le support 100 et une face extérieure 209 à l'opposé de la base 208 et orientée vers l'extérieur.

Pour assurer la fixation du poinçon 202 parallèlement à l'axe X, deux moyens principaux de fixation sont prévus entre le poinçon 202 et le support 100. Chaque moyen principal de fixation est prévu à une extrémité du poinçon 202 et prend alternativement une position de verrouillage dans laquelle le poinçon 202 est verrouillé sur le support 100 et une position de déverrouillage dans laquelle le poinçon 202 n'est pas verrouillé sur le support 100 et est donc libre.

Dans le mode de réalisation de l'invention présenté ici, chaque moyen principal de fixation est une vis de serrage 212 (dont une seule est visible sur la Fig. 2 et qui est représentée par son axe), chacune étant disposée dans un alésage 214 à une des extrémités du poinçon 202 et où la vis de serrage 212 se visse dans le support 100 dans un trou taraudé 108 prévu à cet effet.

D'une manière générale, le procédé de fabrication d'un panneau auto-raidi 50 en matériau composite consiste à réaliser des premières couches de fibres 52 autour de chaque poinçon 202, et plus particulièrement autour de la face extérieure 209, de l'enfoncement 206, et de la face de contact 204a opposée à l'enfoncement 206. Ces premières couches de fibres 52 peuvent être déposées directement sur le poinçon 202, ou être conformées préalablement sous la forme d'une préforme en carbone qui est ensuite mise en place sur le poinçon 202.

Dans le cas de deux enfoncements par poinçon 202, les premières couches de fibres 52 sont déposées autour de la face extérieure 209 et de chaque enfoncement 206.

Le procédé de fabrication consiste ensuite à déposer chaque poinçon 202 ainsi équipé des premières couches de fibres 52 sur le support 100 monté sur le mandrin. Puis les moyens principaux de fixation 212 sont placés en position de verrouillage et chaque système de fixation 106a-b correspondant audit poinçon 202 est déplacé de la position de libération à la position de fixation. Les poinçons 202 sont ainsi déposés et plaqués les uns contre les autres.

Dans le cadre de la réalisation d'un panneau auto-raidi 50 cylindrique, le mandrin est mis en rotation pour tourner le support 100 et permettre ainsi d'accéder facilement par le dessus à chaque face de l'enveloppe 102 pour déposer successivement les poinçons 202 sur chaque face du support 100.

Lorsque tous les poinçons 202 sont en place, le procédé de fabrication se poursuit par le drapage de deuxièmes couches de fibres 54 autour des premières couches de fibres 52 pour former la peau du panneau auto-raidi 50 cylindrique et solidariser les premières couches de fibres 52 de deux poinçons 202 voisins entre elles. À cette fin, le support 100 est mis en rotation par l'intermédiaire du mandrin et les deuxièmes couches de fibres 54 sont déposées durant cette rotation.

Le procédé de fabrication se poursuit ensuite classiquement par la mise en place de l'ensemble dans un sac à vide et le chauffage dans un autoclave pour polymériser la résine contenue dans les couches de fibres 52 et 54.

Après durcissement des couches de fibres 52 et 54 et retrait du sac à vide, le panneau auto-raidi 50 cylindrique est réalisé, les systèmes de fixation 106a-b de chaque poinçon 202 sont alors déplacés de la position de fixation à la position de libération et les moyens principaux de fixation sont placés en position de déverrouillage afin de désolidariser ledit poinçon 202 du support 100 et ledit poinçon 202 est retiré par déplacement parallèlement à l'axe X pour sortir ledit poinçon 202 du panneau auto-raidi 50 qui est ici cylindrique.

Les systèmes de fixation 106a-b permettent également de limiter les déformations du poinçon 202 lors de la montée en température dans l'autoclave.

Les premières couches de fibres 52 de deux poinçons 202 voisins forment entre les deux poinçons 202, les raidisseurs du panneau auto-raidi 50 et les premières couches de fibres 52 qui sont sur la face extérieure 209 fusionnent avec les deuxièmes couches de fibres 54 pour former la peau du panneau auto-raidi 50.

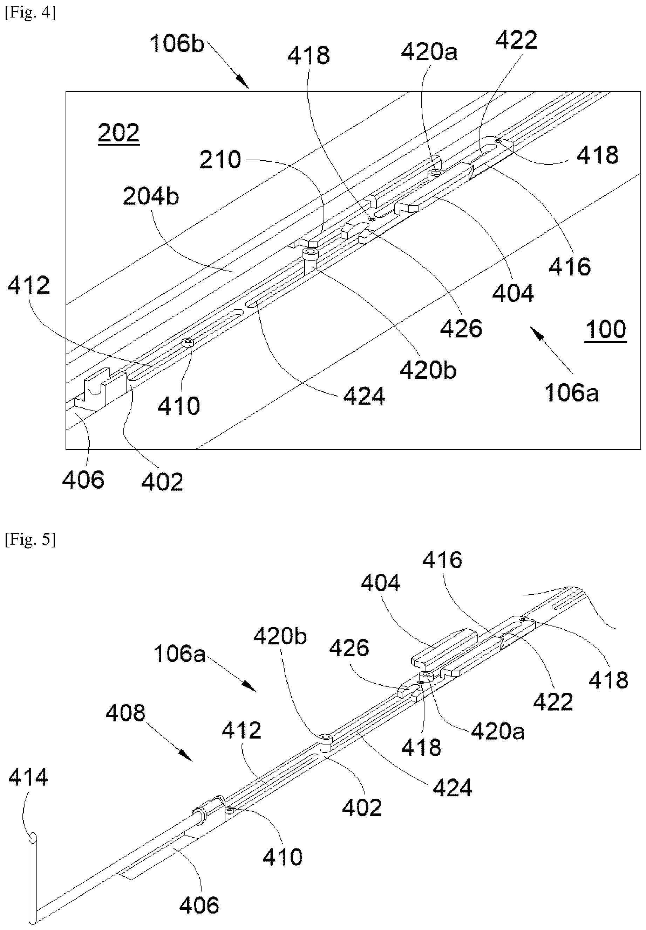

Les Figs. 4 et 5 montrent un système de fixation 106a-b.

Les premiers moyens de fixation 106a comportent un coulisseau 402 monté mobile en translation sur le support 100 parallèlement à l'axe X et au moins un crochet 404 fixé au coulisseau 402 et réparti sur la longueur parallèle à l'axe X du coulisseau 402. Le coulisseau 402 présente une face intérieure qui est en regard du support 100 et une face extérieure orientée à l'opposé, c'est-à-dire vers l'extérieur.

Afin d'assurer le guidage en translation du coulisseau 402, le support 100 présente une rainure rectiligne 406 s'étendant parallèlement à l'axe X, mais ce guidage pourrait être réalisé par tous moyens équivalents comme par exemple par coopération entre un rail solidaire du support 100 et le coulisseau 402.

Dans le mode de réalisation de l'invention présenté ici, pour assurer le maintien du coulisseau 402 sur le support 100, des moyens de maintien 408 sont prévus. Ces moyens de maintien 408 comprennent une fenêtre oblongue 412 traversant le coulisseau 402 entre la face intérieure et la face extérieure et une vis de maintien 410 vissée dans un trou taraudé du support 100 prévu à cet effet, où la vis de maintien 410 est vissée à travers la fenêtre oblongue 412 et où la tête de la vis de maintien 410 déborde au-delà des bords de la fenêtre oblongue 412 et est en regard de la surface extérieure. Le serrage de la vis de maintien 410 doit être suffisamment lâche pour autoriser le déplacement du coulisseau 402 sans forcer et suffisamment serré pour éviter des mouvements parasites du coulisseau 402. Pour un meilleur maintien, il est prévu au moins une vis de maintien 410 et une fenêtre oblongue 412 à chaque extrémité du coulisseau 402.

Pour limiter le déplacement en translation du coulisseau 402, des moyens d'arrêt peuvent être prévus. Ces moyens d'arrêt peuvent comporter par exemple un pion sur ressort solidaire du coulisseau 402 et un trou réalisé dans le support 100, où le pion se positionne dans le trou pour bloquer la translation. Afin d'autoriser plusieurs positions d'arrêt, il est possible de réaliser plusieurs trous et en fonction des besoins, le pion sera alors inséré dans l'un ou l'autre des trous. Bien sûr d'autres moyens d'arrêt peuvent être utilisés, et ils peuvent comporter par exemple les bords de la fenêtre oblongue 412 dans lesquels la vis de maintien 410 vient buter lors de la translation parallèlement à l'axe X.

Les deuxièmes moyens de fixation 106b comportent au moins un nez 210 solidaire du poinçon 202, et plus particulièrement de la base 208. Il y a un nez 210 par crochet 404.

Dans le mode de réalisation de l'invention présenté ici, les nez 210 sont orientés vers l'extérieur du poinçon 202 et les crochets 404 sont orientés vers l'intérieur du poinçon 202 lorsque celui-ci est en position sur le support 100.

Préférentiellement, il y a au moins un nez 210 et un crochet 404 à chaque extrémité du poinçon 202 et au moins un autre nez 210 et un autre crochet 404 entre les deux premiers nez 210 et crochets 404.

Préférentiellement, il y a un nez 210 et un crochet 404 tous les 80 cm pour assurer un bon maintien du poinçon 202 lors d'un retournement du support 100. Bien sûr, cette valeur dépend également des dimensions du panneau auto-raidi 50 à réaliser.

En position de libération, les crochets 404 ne coopèrent pas avec les nez 210, c'est-à-dire qu'ils sont décalés les uns par rapport aux autres parallèlement à l'axe X.

En position de fixation, chaque crochet 404 coopère avec un nez 210. Dans cette position de fixation, le crochet 404 se positionne au-dessus du nez 210 par rapport à l'enveloppe 102, c'est-à-dire que le nez 210 se trouve entre le support 100 et le crochet 404. Ainsi, dans cette position de fixation, en cas de retournement du support 100, les nez 210 restent coincés entre les crochets 404 et le support 100, et une déformation du poinçon 202 est ainsi évitée.

La Fig. 4 montre une position intermédiaire où le crochet 404 commence à recouvrir le nez 210.

Le coulisseau 402 est également équipé de moyens d'actionnement qui prennent ici la forme d'une poignée 414 et qui permettent d'actionner ledit coulisseau 402 pour le déplacer de la position de fixation à la position de libération et inversement. La poignée 414 peut être amovible.

Les nez 210 et les crochets 404 assurent une fixation selon une direction perpendiculaire à la surface de l'enveloppe 102.

Dans le mode de réalisation de l'invention présenté ici, l'outil 300 comporte également à chaque extrémité du poinçon 202, une cale 216 amovible qui se positionne entre l'extrémité du poinçon 202 et le support 100. Cette cale 216 permet un relèvement du poinçon 202 et donc des nez 210 pour que ceux-ci soient bien en contact avec les crochets 404 en position de fixation, et le retrait de cette cale 216 permet un abaissement du poinçon 202 et donc des nez 210 qui peuvent alors librement passer sous les crochets 404 lors du retrait du poinçon 202 parallèlement à l'axe X du panneau auto-raidi 50 après solidification.

La cale 216 peut être par exemple une rondelle qui s'emmanche sur la vis de serrage 212 entre le poinçon 202 et le support 100.

Ainsi, après dépôt d'un poinçon 202 sur le support 100, la cale 216 est positionnée entre le poinçon 202 et le support 100, les moyens principaux de fixation sont placés en position de verrouillage et les systèmes de fixation 106a-b sont placés en position de fixation par chevauchement des nez 210 par les crochets 404.

Après durcissement des fibres 52 et 54, les systèmes de fixation 106a-b sont placés en position de libération, et les moyens principaux de fixation sont placés en position de déverrouillage pour permettre le retrait de la cale 216 et l'abaissement du poinçon 202 et des nez 210 autorisant le déplacement du poinçon 202 en translation pour son retrait.

Dans le mode de réalisation de l'invention présenté sur la Fig. 3, le panneau auto-raidi 50 présenté est cylindrique et nécessite un retournement du support 100, mais l'outil 300 selon l'invention peut également être utilisé pour un panneau auto-raidi 50 globalement plan.

Dans le mode de réalisation de l'invention présenté ici, pour deux poinçons 202 voisins, les premiers moyens de fixation 106a correspondant à un des poinçons 202 et les premiers moyens de fixation 106a correspondant à l'autre des poinçons 202 possèdent un coulisseau 402 commun qui porte les crochets 404 qui coopèrent avec les nez 210 de deux poinçons 202 voisins afin de fixer simultanément lesdits deux poinçons 202, mais il est bien sûr possible de prévoir un coulisseau 402 pour chacun des deux poinçons 202 voisins.

Pour assurer l'adaptabilité des premiers moyens de fixation 106a en cas de changement de poinçons 202 et donc de nez 210, chaque crochet 404, ou ici chaque paire de crochets 404 pour deux poinçons 202 voisins, sont solidaires d'un corps 416 fixé de manière amovible sur le coulisseau 402. La fixation amovible est réalisée ici par deux vis de fixation 418 qui se vissent dans des trous taraudés du coulisseau 402 prévus à cet effet, en prenant le corps 416 en sandwich entre leurs têtes et le coulisseau 402.

Selon un mode de réalisation particulier, l'outil 300 comporte deux vis de blocage 420a-b qui sont fixées au support 100. La première vis de blocage 420a traverse successivement le coulisseau 402 et le corps 416 à travers des premières fenêtres oblongues 422 prévues à cet effet. La deuxième vis de blocage 420b traverse le coulisseau 402 à travers une deuxième fenêtre oblongue 424 prévue à cet effet.

Le corps 416 présente également une échancrure 426 qui est arrangée de manière à recevoir la deuxième vis de blocage 420b en position de fixation. Ainsi, en position de fixation la première vis de blocage 420a est logée dans les premières fenêtres oblongues 422 et la deuxième vis de blocage 420b est logée dans l'échancrure 426 permettant de bloquer le corps 416 dans la position désirée.

L'outil 300 peut également être utilisé en présentant son axe X verticalement. Pour assurer une mise en butée des poinçons 202 et ainsi assurer un soutien desdits poinçons 202, le support 100 comporte au niveau de sa partie inférieure, un muret 110 qui s'étend sur le pourtour dudit support 100 et contre lequel l'une des extrémités de chaque poinçon 202 est en appui.

D'une manière plus particulière, le procédé de fabrication d'un panneau auto-raidi 50 en matériau composite à l'aide de l'outil 300 comporte :
- une première étape de fourniture au cours de laquelle le support 100 est fourni et au cours de laquelle l'arbre 104 est fixé au mandrin de la machine tournante,
- une deuxième étape de fourniture au cours de laquelle les poinçons 202 sont fournis,
- une première étape de drapage au cours de laquelle les premières couches de fibres 52 sont déposées sur les poinçons 202,
- une étape de dépose au cours de laquelle un poinçon 202 ainsi drapé est déposé sur le support 100,
- une étape de verrouillage au cours de laquelle les moyens principaux de fixation 212 du poinçon 202 ainsi calé sont placés en position de verrouillage,
- une étape de fixation au cours de laquelle les systèmes de fixation 106a-b du poinçon 202 ainsi verrouillé sont déplacés de la position de libération à la position de fixation,
- une première étape de bouclage sur l'étape de dépose tant que tous les poinçons 202 n'ont pas été déposés,
- une deuxième étape de drapage au cours de laquelle les deuxièmes couches de fibres 54 sont déposées sur les premières couches de fibres 52,
- une étape de mise sous vide au cours de laquelle l'ensemble ainsi drapé est placé dans un sac à vide,
- une étape de chauffage au cours de laquelle l'ensemble ainsi sous vide est chauffé dans un autoclave,
- une étape de libération au cours de laquelle les systèmes de fixation 106a-b d'un poinçon 202 sont déplacés de la position de fixation à la position de libération,
- une étape de déverrouillage au cours de laquelle les moyens principaux de fixation 212 du poinçon 202 ainsi libéré sont placés en position de déverrouillage,
- une étape de retrait au cours de laquelle le poinçon 202 ainsi déverrouillé est retiré par déplacement parallèlement à l'axe X, et
- une deuxième étape de bouclage sur l'étape de libération tant que tous les poinçons 202 n'ont pas été retirés.

Dans le cas particulier d'utilisation de cales 216, le procédé de fabrication comporte, entre l'étape de dépose et l'étape de verrouillage, une étape de calage au cours de laquelle les cales 216 sont disposées entre le poinçon 202 ainsi déposé et le support 100.

## Revendications

1. Outil (300) pour la réalisation d'un panneau auto-raidi (50), ledit outil (300) comportant :
- un support (100) avec un arbre (104) présentant un axe (X),
- un ensemble de poinçons (202) disposés les uns à côté des autres parallèlement à l'axe (X), où entre deux poinçons (202) voisins est délimité un canal parallèle à l'axe (X),
- pour chaque poinçon (202), deux systèmes de fixation (106a-b), où chaque système de fixation (106a-b) comporte des premiers moyens de fixation (106a) et des deuxièmes moyens de fixation (106b), et
- pour chaque poinçon (202), deux moyens principaux de fixation (212), chacun étant prévu à une extrémité du poinçon (202) et prenant alternativement une position de verrouillage dans laquelle le poinçon (202) est verrouillé sur le support (100) et une position de déverrouillage dans laquelle le poinçon (202) n'est pas verrouillé sur le support (100),
l'outil (300) étant **caractérisé en ce que** les premiers moyens de fixation (106a) comportent un coulisseau (402) mobile en translation sur le support (100) parallèlement à l'axe (X) et au moins un crochet (404) fixé au coulisseau (402), **en ce que** les deuxièmes moyens de fixation (106b) comportent au moins un nez (210) solidaire du poinçon (202), et **en ce que** l'outil (300) comporte des moyens d'actionnement (414) prévus pour déplacer le coulisseau (402) alternativement d'une position de fixation dans laquelle chaque nez (210) se trouve entre le support (100) et un crochet (404), à une position de libération dans laquelle les crochets (404) sont décalés par rapport aux nez (210) parallèlement à l'axe (X).

2. Outil (300) selon la revendication 1, **caractérisé en ce que**, pour chaque poinçon (202), l'outil (300) comporte deux cales (216) amovibles, où chacune se positionne entre une extrémité du poinçon (202) et le support (100).

3. Outil (300) selon l'une des revendications 1 ou 2, **caractérisé en ce que** pour deux poinçons (202) voisins, les premiers moyens de fixation (106a) correspondant à un des poinçons (202) et les premiers moyens de fixation (106a) correspondant à l'autre des poinçons (202) possèdent un coulisseau (402) commun.

4. Outil (300) selon l'une des revendications 1 à 3, **caractérisé en ce qu'**à chaque extrémité du coulisseau (402), ledit coulisseau (402) est percé d'une fenêtre oblongue (412) et ledit outil (300) comporte une vis de maintien (410) vissée dans un trou taraudé du support (100) à travers la fenêtre oblongue (412) et où la tête de la vis de maintien (410) déborde au-delà des bords de la fenêtre oblongue (412).

5. Outil (300) selon l'une des revendications 1 à 4, **caractérisé en ce que** chaque crochet (404) est solidaire d'un corps (416) fixé de manière amovible sur le coulisseau (402).

6. Outil (300) selon la revendication 5, **caractérisé en ce que** l'outil (300) comporte deux vis de blocage (420a-b) fixées au support (100), **en ce que** la première vis de blocage (420a) traverse le coulisseau (402) et le corps (416) à travers des premières fenêtres oblongues (422) prévues à cet effet, **en ce que** la deuxième vis de blocage (420b) traverse le coulisseau (402) à travers une deuxième fenêtre oblongue (424) prévue à cet effet, **en ce que** le corps (416) présente une échancrure (426), et **en ce que** ladite échancrure (426) est arrangée de manière à recevoir la deuxième vis de blocage (420b) en position de fixation.

7. Outil (300) selon l'une des revendications 1 à 6, **caractérisé en ce que** le support (100) comporte au niveau de sa partie inférieure, un muret (110) qui s'étend sur le pourtour dudit support (100).

8. Procédé de fabrication d'un panneau auto-raidi (50) en matériau composite à l'aide d'un outil selon la revendication 1, ledit procédé de fabrication comportant :
- une première étape de fourniture au cours de laquelle le support (100) est fourni et au cours de laquelle l'arbre (104) est fixé à un mandrin d'une machine tournante,
- une deuxième étape de fourniture au cours de laquelle des poinçons (202) sont fournis,
- une première étape de drapage au cours de laquelle des premières couches de fibres (52) sont déposées sur les poinçons (202),
- une étape de dépose au cours de laquelle un poinçon (202) ainsi drapé est déposé sur le support (100),
- une étape de verrouillage au cours de laquelle les moyens principaux de fixation (212) du poinçon (202) ainsi calé sont placés en position de verrouillage,
- une étape de fixation au cours de laquelle les systèmes de fixation (106a-b) du poinçon (202) ainsi verrouillé sont déplacés de la position de libération à la position de fixation,
- une première étape de bouclage sur l'étape de dépose tant que tous les poinçons (202) n'ont pas été déposés,
- une deuxième étape de drapage au cours de laquelle des deuxièmes couches de fibres (54) sont déposées sur les premières couches de fibres (52),
- une étape de mise sous vide au cours de laquelle l'ensemble ainsi drapé est placé dans un sac à vide,
- une étape de chauffage au cours de laquelle l'ensemble ainsi sous vide est chauffé dans un autoclave,
- une étape de libération au cours de laquelle les systèmes de fixation (106a-b) d'un poinçon (202) sont déplacés de la position de fixation à la position de libération,
- une étape de déverrouillage au cours de laquelle les moyens principaux de fixation (212) du poinçon (202) ainsi libéré sont placés en position de déverrouillage,
- une étape de retrait au cours de laquelle le poinçon (202) ainsi déverrouillé est retiré par déplacement parallèlement à l'axe (X), et
- une deuxième étape de bouclage sur l'étape de libération tant que tous les poinçons (202) n'ont pas été retirés.

9. Procédé de fabrication selon la revendication 8, **caractérisé en ce qu'**il comporte, entre l'étape de dépose et l'étape de verrouillage, une étape de calage au cours de laquelle des cales (216) sont disposées entre le poinçon (202) ainsi déposé et le support (100).

## Patentansprüche

1. Werkzeug (300) zur Herstellung einer selbstversteifenden Platte (50), wobei das Werkzeug (300) umfasst:
- einen Träger (100) mit einer Welle (104), die eine Achse (X) aufweist,
- eine Anordnung von Stempeln (202), die nebeneinander parallel zu der Achse (X) angeordnet sind, wobei zwischen zwei benachbarten Stempeln (202) ein parallel zu der Achse (X) verlaufender Kanal begrenzt wird,
- für jeden Stempel (202) zwei Befestigungssysteme (106ab), wobei jedes Befestigungssystem (106a-b) erste Befestigungsmittel (106a) und zweite Befestigungsmittel (106b) umfasst, und
- für jeden Stempel (202) zwei Hauptbefestigungsmittel (212), von denen jedes an einem Ende des Stempels (202) vorgesehen ist und alternativ eine Verriegelungsposition, in welcher der Stempel (202) an dem Träger (100) verriegelt ist, und eine Entriegelungsposition, in welcher der Stempel (202) nicht an dem Träger (100) verriegelt ist, einnimmt,
wobei das Werkzeug (300) **dadurch gekennzeichnet ist, dass** die ersten Befestigungsmittel (106a) einen Schieber (402) umfassen, der an dem Träger (100) parallel zu der Achse (X) translatorisch beweglich ist, und mindestens einen Haken (404), der an dem Schieber (402) befestigt ist, dass die zweiten Befestigungsmittel (106b) mindestens eine Nase (210) umfassen, die fest mit dem Stempel (202) verbunden ist, und dass das Werkzeug (300) Betätigungsmittel (414) umfasst, die vorgesehen sind, um den Schieber (402) alternativ aus einer Befestigungsposition, in der sich jede Nase (210) zwischen dem Träger (100) und einem Haken (404) befindet, in eine Freigabeposition, in der die Haken (404) in Bezug auf die Nasen (210) parallel zu der Achse (X) versetzt sind, zu verlagern.

2. Werkzeug (300) nach Anspruch 1, **dadurch gekennzeichnet, dass** das Werkzeug (300) für jeden Stempel (202) zwei lösbare Keile (216) umfasst, wobei sich jeder zwischen einem Ende des Stempels (202) und dem Träger (100) positioniert.

3. Werkzeug (300) nach einem der Ansprüche 1 oder 2, **dadurch gekennzeichnet, dass** bei zwei benachbarten Stempeln (202) die ersten Befestigungsmittel (106a), die einem der Stempel (202) entsprechen, und die ersten Befestigungsmittel (106a), die dem anderen der Stempel (202) entsprechen, einen gemeinsamen Schieber (402) besitzen.

4. Werkzeug (300) nach einem der Ansprüche 1 bis 3, **dadurch gekennzeichnet, dass** an jedem Ende des Schiebers (402) der Schieber (402) mit einem länglichen Fenster (412) durchbrochen ist und das Werkzeug (300) eine Halteschraube (410) umfasst, die in ein Gewindeloch des Trägers (100) durch das längliche Fenster (412) hindurch geschraubt ist, und wobei der Kopf der Halteschraube (410) über die Ränder des länglichen Fensters (412) hinaus übersteht.

5. Werkzeug (300) nach einem der Ansprüche 1 bis 4, **dadurch gekennzeichnet, dass** jeder Haken (404) fest mit einem Körper (416) verbunden ist, der lösbar an dem Schieber (402) befestigt ist.

6. Werkzeug (300) nach Anspruch 5, **dadurch gekennzeichnet, dass** das Werkzeug (300) zwei Sicherungsschrauben (420a-b) umfasst, die an dem Träger (100) befestigt sind, dass die erste Sicherungsschraube (420a) den Schieber (402) und den Körper (416) durch dazu vorgesehene erste längliche Fenster (422) durchdringt, dass die zweite Sicherungsschraube (420b) den Schieber (402) durch ein dazu vorgesehenes zweites längliches Fenster (424) durchdringt, dass der Körper (416) einen Ausschnitt (426) aufweist und dass der Ausschnitt (426) so gestaltet ist, dass er die zweite Sicherungsschraube (420b) in der Befestigungsposition aufnimmt.

7. Werkzeug (300) nach einem der Ansprüche 1 bis 6, **dadurch gekennzeichnet, dass** der Träger (100) an seinem unteren Teil eine Leiste (110) umfasst, die sich über den Umfang des Trägers (100) erstreckt.

8. Verfahren zur Fertigung einer selbstversteifenden Platte (50) aus Verbundwerkstoff mithilfe eines Werkzeugs nach Anspruch 1, wobei das Fertigungsverfahren umfasst:
- einen ersten Bereitstellungsschritt, bei dem der Träger (100) bereitgestellt wird und bei dem die Welle (104) an einem Spannfutter einer drehenden Maschine befestigt wird,
- einen zweiten Bereitstellungsschritt, bei dem Stempel (202) bereitgestellt werden,
- einen ersten Belegungsschritt, bei dem erste Faserlagen (52) auf die Stempel (202) aufgebracht werden,
- einen Aufbringungsschritt, bei dem ein so belegter Stempel (202) auf den Träger (100) aufgebracht wird,
- einen Verriegelungsschritt, bei dem die Hauptbefestigungsmittel (212) des so verkeilten Stempels (202) in die Verriegelungsposition platziert werden,
- einen Befestigungsschritt, bei dem die Befestigungssysteme (106a-b) des so verriegelten Stempels (202) aus der Freigabeposition in die Befestigungsposition verlagert werden,
- einen ersten Rücksprungschritt zum Aufbringungsschritt, solange nicht alle Stempel (202) aufgebracht worden sind,
- einen zweiten Belegungsschritt, bei dem zweite Faserlagen (54) auf die ersten Faserlagen (52) aufgebracht werden,
- einen Evakuierungsschritt, bei dem die so belegte Anordnung in einen Vakuumsack platziert wird,
- einen Erwärmungsschritt, bei dem die so evakuierte Anordnung in einem Autoklaven erwärmt wird,
- einen Freigabeschritt, bei dem die Befestigungssysteme (106a-b) eines Stempels (202) aus der Befestigungsposition in die Freigabeposition verlagert werden,
- einen Entriegelungsschritt, bei dem die Hauptbefestigungsmittel (212) des so freigegebenen Stempels (202) in die Entriegelungsposition platziert werden,
- einen Rückzugsschritt, bei dem der so entriegelte Stempel (202) durch Verlagerung parallel zu der Achse (X) zurückgezogen wird, und
- einen zweiten Rücksprungschritt zum Freigabeschritt, solange nicht alle Stempel (202) zurückgezogen worden sind.

9. Verfahren zur Fertigung nach Anspruch 8, **dadurch gekennzeichnet, dass** es zwischen dem Aufbringungsschritt und dem Verriegelungsschritt einen Verkeilungsschritt umfasst, bei dem Keile (216) zwischen dem so aufgebrachten Stempel (202) und dem Träger (100) angeordnet werden.

## Claims

1. Tool (300) for creating a self-stiffened panel (50), said tool (300) comprising:
- a support (100) having a shaft (104) with an axis (X),
- a set of punches (202) arranged next to one another parallel to the axis (X), a channel parallel to the axis (X) being delimited between two adjacent punches (202),
- for each punch (202), two securing systems (106a-b), where each securing system (106a-b) comprises first securing means (106a) and second securing means (106b), and
- for each punch (202), two main securing means (212), each being provided at one end of the punch (202) and adopting either a locking position in which the punch (202) locked on the support (100) or an unlocking position in which the punch (202) is not locked on the support (100),
the tool (300) being characterizes in that the first securing means (106a) comprise a slider (402) that is able to move in translation on the support (100) parallel to the axis (X) and at least one hook (404) secured to the slider (402), in that the second securing means (106b) comprise at least one nose (210) integral with the punch (202), and in that the toll (300) comprises actuating means (414) that are intended to move the slider (402) alternately from a securing position in which each nose (210) is located between the support (100) and a hook (404), to a release position in which the hooks (404) are offset with respect to the noses (210) parallel to the axis (X).

2. Tool (300) according to Claim 1, **characterized in that**, for each punch (202), the tool (300) comprises two removable shims (216), each being positioned between an end of the punch (202) and the support (100).

3. Tool (300) according to either of Claims 1 and 2, **characterized in that**, for two adjacent punches (202), the first securing means (106a) corresponding to one of the punches (202) and the first securing means (106a) corresponding to the other of the punches (202) share a slider (402).

4. Tool (300) according to one of Claims 1 to 3, **characterized in that**, at each end of the slider (402), said slider (402) has pierced in it an oblong window (412) and said tool (300) comprises a holding screw (410) screwed into a tapped hole of the support (100) through the oblong window (412), the head of the holding screw (410) extending beyond the edges of the oblong window (412).

5. Tool (300) according to one of Claims 1 to 4, **characterized in that** each hook (404) is integral with a body (416) that is removably secured to the slider (402).

6. Tool (300) according to Claim 5, **characterized in that** the tool (300) comprises two set screws (420a-b) secured to the support (100), **in that** the first set screw (420a) passes through the slider (402) and the body (416) via first oblong windows (422) provided for that purpose, **in that** the second set screw (420b) passes through the slider (402) via a second oblong window (424) provided for that purpose, **in that** the body (416) has a notch (426), and **in that** said notch (426) is arranged so as to receive the second set screw (420b) in the securing position.

7. Tool (300) according to one of Claims 1 to 6, **characterized in that** the support (100) comprises, at its lower part, a wall (110) that extends around the perimeter of said support (100).

8. Method for manufacturing a self-stiffened panel (50) made of composite material using a tool according to Claim 1, said manufacturing method comprising:
- a first provision step during which the support (100) is provided, and during which the shaft (104) is secured to a chuck of a rotating machine,
- a second provision step during which punches (202) are provided,
- a first lay-up step during which first layers of fibres (52) are deposited onto the punches (202),
- a deposition step during which a punch (202) laid-up in this manner is deposited onto the support (100),
- a locking step during which the main means (212) of securing the punch (202) wedged in this manner are placed in the locking position,
- a securing step during which the systems (106a-b) for securing the punch (202) locked in this manner are moved from the release position to the securing position,
- a first step of looping back to the deposition step until all of the punches (202) have been deposited,
- a second lay-up step during which second layers of fibres (54) are deposited onto the first layers of fibres (52),
- a vacuum-bagging step during which the assembly which has been laid-up in this manner is placed in a vacuum bag,
- a heating step during which the assembly which has been vacuum-bagged in this manner is heated in an autoclave,
- a release step during which the systems (106a-b) for securing a punch (202) are moved from the securing position to the release position,
- an unlocking step during which the main means (212) of securing the punch (202) released in this manner are placed in the unlocking position,
- a removal step during which the punch (202) unlocked in this manner is removed by displacement parallel to the axis (X), and
- a second step of looping back to the release step until all of the punches (202) have been removed.

9. Manufacturing method according to Claim 8, **characterized in that** it comprises, between the deposition step and the locking step, a wedging step during which the shims (216) are positioned between the punch (202) deposited in this manner and the support (100).
